# EUROPEAN PATENT APPLICATION

(11) **EP 2 879 361 A1**
(43) Date of publication of application: **03.06.2015**
(21) Application number: 13822697.2
(22) Date of filing: 19.07.2013
(51) Int. Cl.: H04M 3/00, H04L 12/70, H04M 3/60, H04M 11/04, H04W 4/22, H04W 80/04

(54) **MOBILE COMMUNICATION SYSTEM, CALL CONTROL DEVICE, UE, AND MOBILE COMMUNICATION METHOD**

(30) Priority: 25.07.2012 JP 2012164661
(71) Applicant: NTT DOCOMO, INC., Chiyoda-ku Tokyo 100-6150 (JP)
(72) Inventor: TANAKA, Itsuma, Tokyo 100-6150 (JP); TAKEDA, Shinya, Tokyo 100-6150 (JP); SASABE, Akihide, Tokyo 100-6150 (JP); SASADA, Keisuke, Tokyo 100-6150 (JP)
(74) Representative: Hoffmann Eitle
(86) International application number: PCT/JP2013/069651
(87) International publication number: WO 2014/017399

(57) **Abstract**

A UE (20) transmits an INVITE message (call origination request) for an emergency call to an E-CSCF (50). The E-CSCF (50) receives the INVITE message through an eNB (30) and determines a PSAP of a connection target of the emergency call based on the received INVITE message. When there are multiple emergency call categories (for example, Fire and Ambulance) associated with an emergency telephone number allocated to the PSAP, the UE (20) transmits the INVITE message including P-Emergency-Sub-Category indicating the multiple emergency call categories to the E-CSCF (50). The call control unit determines the PSAP based on the multiple emergency call categories included in the received INVITE message.

## Description

### TECHNICAL FIELD

The present invention relates to a mobile communication system including a call control device which configures an IP multimedia subsystem and controls a session of an emergency call, a call control device, a mobile station, and a mobile communication method.

### BACKGROUND ART

In Long Term Evolution (LTE), which is defined in the 3rd Generation Partnership Project, Voice over LTE (VoLTE) is used to connect a voice communication call through an IP multimedia subsystem (IMS). Such voice communication calls include emergency calls for police, ambulance, firefighting and other services, and a method of connecting the emergency calls to a Public Safety Answering Point (PSAP) through the IMS is also defined (for example, non-patent document 1).

Specifically, an E-CSCF (call control device), which is an SIP server to control emergency calls in the IMS, receives an INVITE message sent with origination of an emergency call from a UE (mobile station). A "Request-URI" field of the INVITE message includes Emergency Service URI defined in IETF RFC5031. It is also defined that a "To header" field may include the same Emergency Service URI as that of the "Request-URI." Upon receipt of the INVITE message from the UE, the E-CSCF transmits, based on Emergency Service URI (for example, sos.fire), a connection request for the emergency call to the PSAP for firefighting.

### PRIOR ART DOCUMENT

### NON-PATENT DOCUMENT

Non-patent document 1: 3GPP TS 24.229 V11.4.0 Subclause 5.1.6.8.3, 3rd Generation Partnership Project; Technical Specification Group Core Network and Terminals; IP multimedia call control protocol based on Session Initiation Protocol (SIP) and Session Description Protocol (SDP);Stage 3 (Release 11), 3GPP, June 2012

### SUMMARY OF THE INVENTION

However, the above-described conventional connection of the emergency call through the IMS has the following problem. For example, in Japan, like "119," a single telephone number is assigned multiple emergency call categories such as ambulance and firefighting. Therefore, in the case where Emergency Service URI indicates either of ambulance (sos.ambulance) and firefighting (sos.fire), the E-CSCF only has to send a connection request to the PSAP (specifically, the switchboard) for the ambulance and firefighting. For this reason, when "119" is dialed, the UE only has to transmit an INVITE message including sos.fire or sos.ambulance.

On the other hand, if such a UE is roaming in a mobile communication network in a foreign country, and if a user dials "119" in the foreign country, the UE transmits the INVITE message including sos. fire or sos.ambulance in the same manner. Here, if different PSAPs are used for ambulance and firefighting in a country (region) where the UE is roaming, an E-CSCF belonging to the mobile communication network transits a connection request to the PSAP based on Emergency Service URI included in the INVITE message. For this reason, if the UE is set to transmit an INVITE message including sos. fire when "119" is dialed, the UE is inevitably connected with the PSAP for firefighting even through a user dials "119" with an intention to request a dispatch of an ambulance.

To address this, the invention has been made with a view to the above-described circumstances, and has an objective to provide a mobile communication system, a call control device, a mobile station, and a mobile communication method by which even if a user, when roaming in a foreign country, dials a telephone number of an emergency call used in a home network, the emergency call can be prevented from being connected to a PSAP not intended by the user.

A first feature of the invention is summarized as a mobile communication system, including: a mobile station configured to execute a radio communication with a radio base station; and a call control device forming an IP multimedia subsystem and configured to control a session of an emergency call originated from the mobile station. Here, the mobile station includes a call origination request transmission unit configured to transmit a call origination request for the emergency call to the call control device, the call control device includes a call control unit configured to receive the call origination request through the radio base station and determine an emergency call answering point which is a connection target of the emergency call based on the received call origination request, and if there are multiple emergency call categories associated with an emergency telephone number allocated to the emergency call answering point, the call origination request transmission unit transmits the call origination request including a category header indicating the multiple emergency call categories to the call control device, and the call control unit determines the emergency call answering point based on the multiple emergency call categories included in the received call origination request.

A second feature of the invention is summarized as a call control device forming an IP multimedia subsystem and configured to control a session of an emergency call originated from a mobile station configured to execute a radio communication with a radio base station, the call control device including: a call control unit configured to receive a call origination request for the emergency call through the radio base station and determine an emergency call answering point which is a connection target of the emergency call based on the received call origination request. Here, if there are multiple emergency call categories associated with an emergency telephone number allocated to the emergency call answering point, the call origination request includes a category header indicating the multiple emergency call categories, and the call control unit determines the emergency call answering point based on the multiple emergency call categories included in the received call origination request.

A third feature of the invention is summarized as a mobile station which executes a radio communication with a radio base station, the mobile station including: a call origination request transmission unit configured to transmit a call origination request for an emergency call to a call control device to control a session of the emergency call. Here, if there are multiple emergency call categories associated with an emergency telephone number allocated to an emergency call answering point which is a connection target of the emergency call, the call origination request transmission unit transmits the call origination request including information indicating that the request is for the emergency call and a category header indicating the multiple emergency call categories to the call control device.

A fourth feature of the invention is summarized as a mobile communication method which uses a mobile station configured to execute a radio communication with a radio base station and a call control device forming an IP multimedia subsystem and configured to control a session of an emergency call originated from the mobile station, the method including the steps of: causing the mobile station to transmit a call origination request for the emergency call to the call control device; and causing the call control device to receive the call origination request through the radio base station and to determine an emergency call answering point which is a connection target of the emergency call based on the received call origination request. Here, in the transmitting step, if there are multiple emergency call categories associated with an emergency telephone number allocated to the emergency call answering point, the call origination request including a category header indicating the multiple emergency call categories is transmitted to the call control device, and in the determining step, the emergency call answering point is determined based on the multiple emergency call categories included in the received call origination request.

A fifth feature of the invention is summarized as a mobile communication system, including: a mobile station configured to execute a radio communication with a radio base station; and a call control device forming an IP multimedia subsystem and configured to control a session of an emergency call originated from the mobile station. Here, the mobile station includes a call origination request transmission unit configured to transmit a call origination request for the emergency call to the call control device, the call control device includes a call control unit configured to receive the call origination request through the radio base station, and determine an emergency call answering point which is a connection target of the emergency call based on the received call origination request, and if there are multiple emergency call categories associated with an inputted emergency telephone number, the call origination request transmission unit transmits the call origination request including information that the request is for the emergency call and the emergency telephone number to the call control device, and the call control unit determines the emergency call answering point based on the emergency telephone number included in the received call origination request.

A sixth feature of the invention is summarized as a call control device which forms an IP multimedia subsystem and controls a session of an emergency call originated from a mobile station configured to execute a radio communication with a radio base station, the call control device including: a call control unit configured to receive a call origination request for the emergency call from the mobile station through the radio base station and determine an emergency call answering point which is a connection target of the emergency call based on the received call origination request. Here, the call origination request includes information indicating that the request is for the emergency call and an emergency telephone number inputted in the mobile station, and the call control unit determines the emergency call answering point based on the emergency telephone number included in the received call origination request.

A seventh feature of the invention is summarized as a mobile station which executes a radio communication with a radio base station, the mobile station including: a call origination request transmission unit configured to transmit a call origination request for an emergency call to a call control device configured to control a session of the emergency call. Here, if there are multiple emergency call categories associated with an inputted emergency telephone number, the call origination request transmission unit transmits the call origination request including information indicating that the request is for the emergency call and the emergency telephone number to the call control device.

A eighth feature of the invention is summarized as a mobile communication method which uses a mobile station configured to execute a radio communication with a radio base station, and a call control device forming an IP multimedia subsystem and configured to control a session of an emergency call originated from the mobile station, the method including the steps of: causing the mobile station to transmit a call origination request for the emergency call to the call control device; and
causing the call control device to receive the call origination request through the radio base station and to determine an emergency call answering point which is a connection target of the emergency call based on the received call origination request. Here, in the transmitting step, if there are multiple emergency call categories associated with an inputted emergency telephone number, the call origination request including information indicating that the request is for the emergency call and the emergency telephone number is transmitted to the call control device, and in the determining step, the emergency call answering point is determined based on the emergency telephone number included in the received call origination request.

A ninth feature of the invention is summarized as a mobile communication system, including: a mobile station configured to execute a radio communication with a radio base station; and a call control device forming an IP multimedia subsystem and configured to control a session of an emergency call originated from the mobile station. Here, the mobile station includes a call origination request transmission unit configured to transmit a call origination request for the emergency call to the call control device, the call control device includes a call control unit configured to receive the call origination request through the radio base station and determine an emergency call answering point which is a connection target of the emergency call based on the received call origination request, and if there are multiple emergency call categories associated with an emergency telephone number allocated to the emergency call answering point, the call origination request transmission unit transmits the call origination request including a category header indicating any one of the multiple emergency call categories to the call control device, and the call control unit determines the emergency call answering point based on the emergency call category included in the received call origination request.

A tenth feature of the invention is summarized as a mobile station which executes a radio communication with a radio base station, the mobile station including: a call origination request transmission unit configured to transmit a call origination request for an emergency call to a call control device configured to control a session of the emergency call. Here, if there are multiple emergency call categories associated with an emergency telephone number allocated to an emergency call answering point which is a connection target of the emergency call, the call origination request transmission unit transmits the call origination request including information indicating that the request is for the emergency call and a category header indicating any one of the multiple emergency call categories to the call control device.

A eleventh feature of the invention is summarized as a mobile communication method which uses a mobile station configured to execute a radio communication with a radio base station, and a call control device forming an IP multimedia subsystem and configured to control a session of an emergency call originated from the mobile station, the method including the steps of: causing the mobile station to transmit a call origination request for the emergency call to the call control device; and causing the call control device to receive the call origination request through the radio base station, and to determine an emergency call answering point which is a connection target of the emergency call based on the received call origination request. Here, in the transmitting step, if there are multiple emergency call categories associated with an emergency telephone number allocated to the emergency call answering point, the call origination request including a category header indicating any one of the multiple emergency call categories is transmitted to the call control device, and in the determining step, the emergency call answering point is determined based on the emergency call category included in the call origination request.

### BRIEF DESCRIPTION OF THE DRAWINGS

[Fig. 1] Fig. 1 is an entire schematic configuration diagram of a mobile communication system 10 according to a first embodiment of the invention.
[Fig. 2] Fig. 2 is a functional block configuration diagram of a UE 20 according to the first embodiment of the invention.
[Fig. 3] Fig. 3 is a functional block configuration diagram of an E-CSCF 50 according to the first embodiment of the invention.
[Fig. 4] Fig. 4 is a diagram (example operation 1) illustrating an operation (communication sequence) until an emergency call originated by the UE 20 according to the first embodiment of the invention is connected with a PSAP.
[Fig. 5] Fig. 5 is a diagram (example operation 2) illustrating an operation (communication sequence) until an emergency call originated by the UE 20 according to the first embodiment of the invention is connected with a PSAP.
[Fig. 6] Fig. 6 is a diagram illustrating an operation flow of determining a PSAP in the E-CSCF 50 according to the first embodiment of the invention.
[Fig. 7] Fig. 7 is a diagram illustrating an example of emergency call category information M1 according to the first embodiment of the invention.
[Fig. 8] Fig. 8 is a diagram illustrating a header configuration of an INVITE message according to the first embodiment of the invention.
[Fig. 9] Fig. 9 is a diagram illustrating an example of PSAP information P1 according to the first embodiment of the invention.
[Fig. 10] Fig. 10 is a diagram illustrating a modification of the header configuration of the INVITE message which is transmitted by the UE 20 according to the first embodiment of the invention.
[Fig. 11] Fig. 11 is a diagram illustrating an example of PSAP information P2 according to a second embodiment of the invention.
[Fig. 12] Fig. 12 is a diagram illustrating an operation (communication sequence) until an emergency call originated by a UE 20 according to the second embodiment of the invention is connected with a PSAP.

### MODE FOR CARRYING OUT THE INVENTION

Next, an embodiment of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### [First Embodiment]

### (1) Entire schematic configuration of a mobile communication system

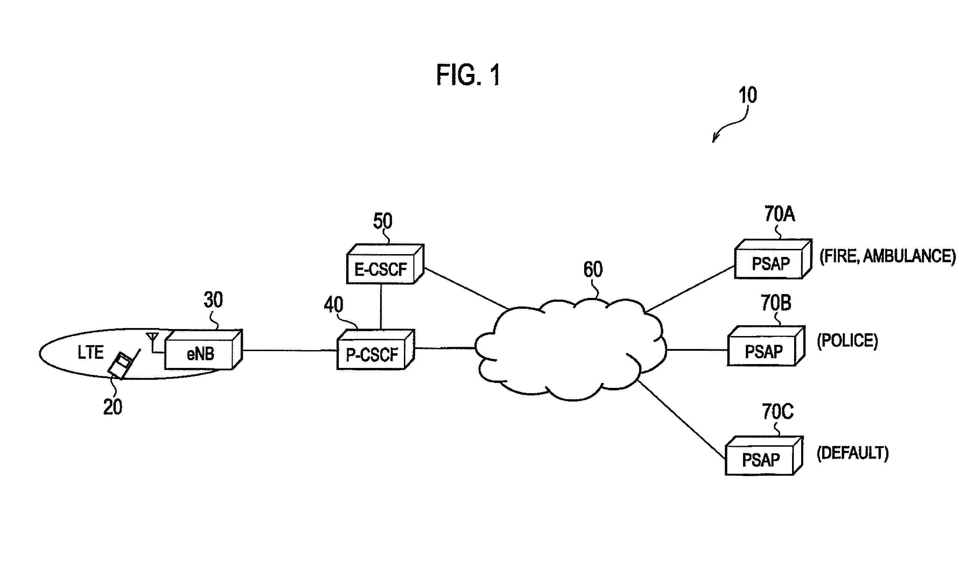

Fig. 1 is an entire schematic configuration diagram of a mobile communication system 10 according to an embodiment. As illustrated in Fig. 1, the mobile communication system 10 includes a mobile station 20 (hereinafter, UE 20), radio base station 30 (hereinafter, eNB 30), Proxy-call Session Control Function 40 (hereinafter, P-CSCF 40), Emergency-Call Session Control Function 50 (hereinafter, E-CSCF 50), and Public Safety Answering Points 70A to 70C (hereinafter, PSAPs 70A to 70C).

The UE 20 is a radio terminal which executes radio communications with the eNB 30 and, in the embodiment, executes an operation according to Long Term Evolution (LTE). Here, the radio communication scheme is not necessarily limited to LTE but may be 3G (W-CDMA) or the like as long as a voice communication call is provided through an IP multimedia subsystem to be described later.

The P-CSCF 40 is a Session Initiation Protocol (SIP) relay server which is allocated in a connection point with IP-Connectivity Access Network (IP-CAN) formed by the eNB 30, a core network (unillustrated) and the like. The P-CSCF 40 not only relays a message according to SIP but also activates QoS control in the IP-CAN and manages a state of an IP-CAN bearer.

The E-CSCF 50 is an SIP relay server which executes relay of an SIP message with the P-CSCF 40, and particularly executes control of an emergency call through the IP multimedia subsystem. In the embodiment, the E-CSCF 50 forms a call control device to control a session of an emergency call originated from the UE 20.

The P-CSCF 40 and the E-CSCF 50 form an IP multimedia subsystem (IMS) which is a multimedia subsystem according to the Internet protocol. Besides the P-CSCF 40 and the E-CSCF 50, the IMS includes unillustrated Interrogating-Call Session Control Function (I-CSCF), Serving-Call Session Control Function (S-CSCF), and Application Server (AS).

The communication network 60 provides a communication path between the IMS IP multimedia subsystem, which is formed by the P-CSCF 40, the E-CSCF 50, and the like, and the PSAPs 70A to 70C. The communication network 60 may be an IP network capable of using SIP or may be a circuit switched network.

The PSAPs 70A to 70C are emergency call answering points as connection targets of emergency calls originated by the UE 20, and actually are switchboards to accept emergency calls. The PSAPs are provided according to the categories of emergency calls. In the embodiment, the PSAP 70A is a switchboard to accept emergency calls for Fire and Ambulance. The PSAP 70B is a switchboard to accept an emergency call for Police.

The PSAP 70C is not associated with any specific category of emergency call and transmits a voice guidance or the like which makes an inquiry about the category of an emergency call to the UE 20. According to an answering result with respect to the voice guidance, the PSAP 70C determines a PSAP as a connection target of the emergency call and transfers the emergency call to the determined PSAP.

### (2) Functional block configuration of the mobile communication system

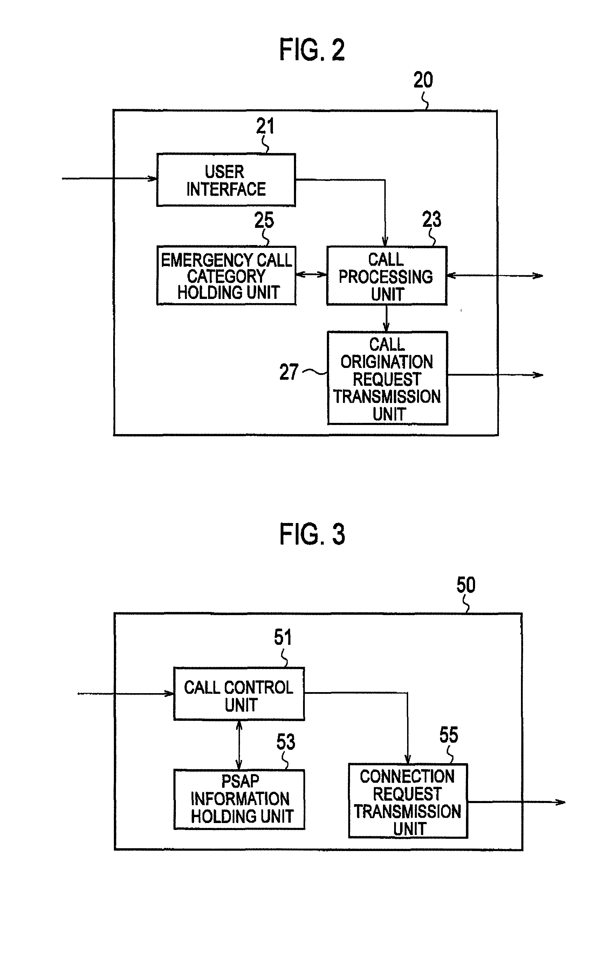

Hereinafter, the functional block configuration of the mobile communication system 10 is described. Specifically, the functional block configurations of the UE 20 and the E-CSCF 50 are described. Fig. 2 is a functional block configuration diagram of the UE 20 and Fig. 3 is a functional block configuration diagram of the E-CSCF 50.

### (2.1) UE 20

As illustrated in Fig. 2, the UE 20 includes a user interface 21, a call processing unit 23, an emergency call category information holding unit 25, and a call origination request transmission unit 27.

The user interface 21 provides an interface with which a user operates the UE 20. In particular, in the embodiment, the user interface 21 acquires an emergency telephone number (for example, "119" or the like) which is dialed by a user and notifies the acquired emergency telephone number to the call processing unit 23.

Based on the emergency telephone number notified from the user interface 21, the call processing unit 23 executes call processing according to the emergency telephone number. In particular, in the embodiment, based on the emergency telephone number which is dialed by a user, the call processing unit 23 creates an INVITE message (call origination request) to be transmitted to the P-CSCF 40. Here, the INVITE message transmitted to the P-CSCF 40 is transferred by the P-CSCF 40 to the E-CSCF 50. In other words, the INVITE message is practically transmitted from the UE 20 to the E-CSCF 50.

Specifically, the call processing unit 23 refers to emergency call category information M1 which is held in the emergency call category information holding unit 25 and creates an INVITE message according to the emergency telephone number dialed by a user.

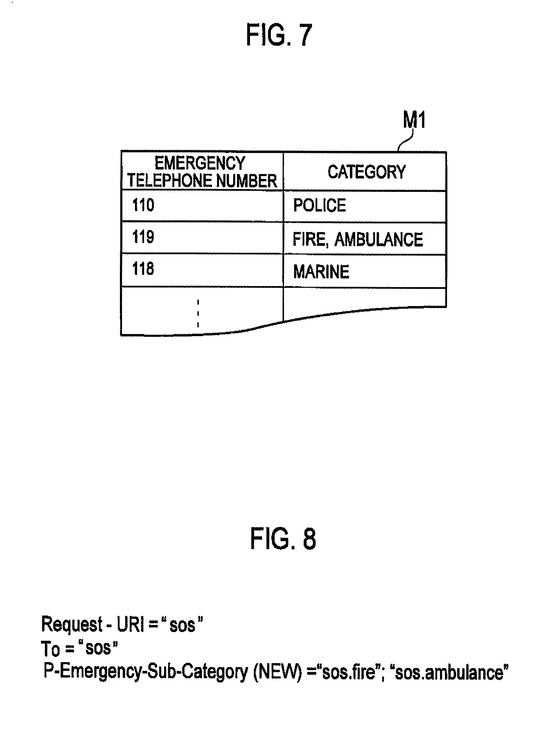

The emergency call category information holding unit 25 holds emergency call category information MI in which emergency telephone numbers are associated with emergency call categories. Fig. 7 illustrates an example of the emergency call category information M1. As illustrated in Fig. 7, the emergency call category information M1 has the emergency telephone numbers and emergency call categories (categories) which are associated with each other. For example, in Japan, "110" is associated with the police (Police) and "118" is associated with the Japan Coast Guard (marine).

On the other hand, "119" is associated with multiple emergency call categories of firefighting (Fire) and ambulance (Ambulance). In other words, the emergency call category information holding unit 25 can hold the emergency call category information M1 in which an emergency telephone number is associated with multiple emergency call categories.

Based on the control from the call processing unit 23, the call origination request transmission unit 27 transmits a call origination request for the emergency call to the P-CSCF 40. Specifically, based on the emergency call category information M1 held in the emergency call category information holding unit 25, the call origination request transmission unit 27 transmits a call origination request.

Here, when multiple emergency call categories associated with the emergency telephone number allocated to the PSAP exist, the call origination request transmission unit 27 transmits a call origination request including a category header indicating multiple emergency call categories to the P-CSCF 40. For example, when multiple emergency call categories (Fire and Ambulance) associated with the emergency telephone number (119) allocated to the PSAP 70A exist, the call origination request transmission unit 27 transmits an INVITE message including P-Emergency-Sub-Category (category header) indicating the Fire and Ambulance to the P-CSCF 40.

Fig. 8 illustrates the header configuration of the INVITE message which is transmitted by the call origination request transmission unit 27. As illustrated in Fig. 8, the header of the INVITE message has Request URI and To header. Request URI and To header only include information indicating that the request is for an emergency call. Specifically, "sos" is set according to IETF RFC5031. Although RFC5031 defines "sos.fire,""sos.ambulance," and the like, Request URI and To header herein do not use these pieces of information, but only include "sos" which is the information just indicating that the request is for an emergency call. However, to set "sos" in Request URI and To header is not always needed. For example, another service defined by RFC5031 may be set or it is also possible to refer to P-Emergency-Sub-Category only instead of referring to Request URI and To header.

On the other hand, P-Emergency-Sub-Category includes multiple emergency call categories, specifically, "sos.fire" and "sos.amulance." This embodiment provides as an example in Japan, an example where two emergency call categories of "sos.fire" and "sos.ambulance" are set, but three or more emergency call categories may be set in P-Emergency-Sub-Category.

### (2.2) E-CSCF 50

As illustrated in FIG. 3, the E-CSCF 50 includes a call control unit 51, a PSAP information holding unit 53, and a connection request transmission unit 55.

The call control unit 51 receives an INVITE message transmitted from the UE 20 through the eNB 30. The call control unit 51 determines a PSAP which is a connection target of an emergency call based on the received INVITE message.

In particular, when the received INVITE message includes multiple emergency call categories, the call control unit 51 determines a PSAP as a connection target of the emergency call based on the multiple emergency call categories. Specifically, the call control unit 51 determines a PSAP as a connection target of the emergency call based on the multiple emergency call categories included in the INVITE message and PSAP information P1 indicating a correspondence relationship between the PSAP and the emergency call category.

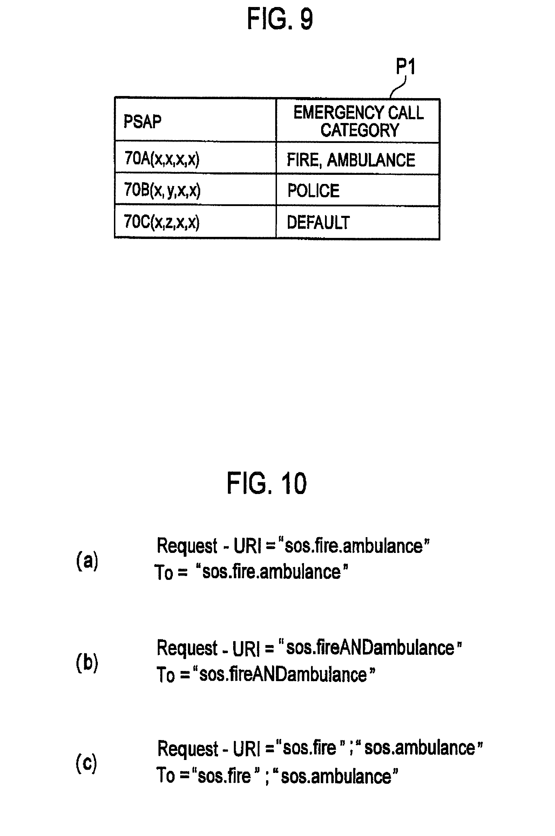

Fig. 9 illustrates an example of the PSAP information P1. As illustrated in Fig. 9, the PSAP 70A is associated with multiple emergency call categories such as Fire and Ambulance. In addition, the PSAP 70B is associated with Police and the PSAP 70C is associated with a default (voice guidance) emergency call category. Here, the PSAP information is actually configured of IP addresses and telephone numbers which are allocated to the PSAPs 70A to 70C.

Also, when a PSAP with which the emergency call is to be connected cannot be determined depending on the multiple emergency call categories included in the INVITE message received from the UE 20, the call control unit 51 determines a default answering point defined in advance, in the present embodiment, the PSAP 70C, as a connection target of the emergency call.

The PSAP information holding unit 53 holds the above-described PSAP information P1. The PSAP information holding unit 53 holds PSAP information P1 as illustrated in Fig. 9 per country. For example, an E-CSCF 50 installed in Japan holds PSAP information P1 for Japan. On the other hand, an E-CSCF 50 installed in a foreign country (a roaming network visited by the UE 20) holds PSAP information P1 for the foreign country.

Based on the control from the call control unit 51, the connection request transmission unit 55 transmits a connection request for the emergency call to the determined PSAP. Specifically, the connection request transmission unit 55 transmits a connection request for the emergency call to the determined PSAP through the IMS. Or, the connection request transmission unit 55 transmits a connection request for the emergency call to the determined PSAP through a circuit switched network (such as PSTN).

### (3) Operation of the mobile communication system

Hereinafter, an operation of the above-described mobile communication system 10 is described. Specifically, described is an operation of the mobile communication system 10 when the UE 20 originates an emergency call.

### (3.1) Example emergency call connection operation 1

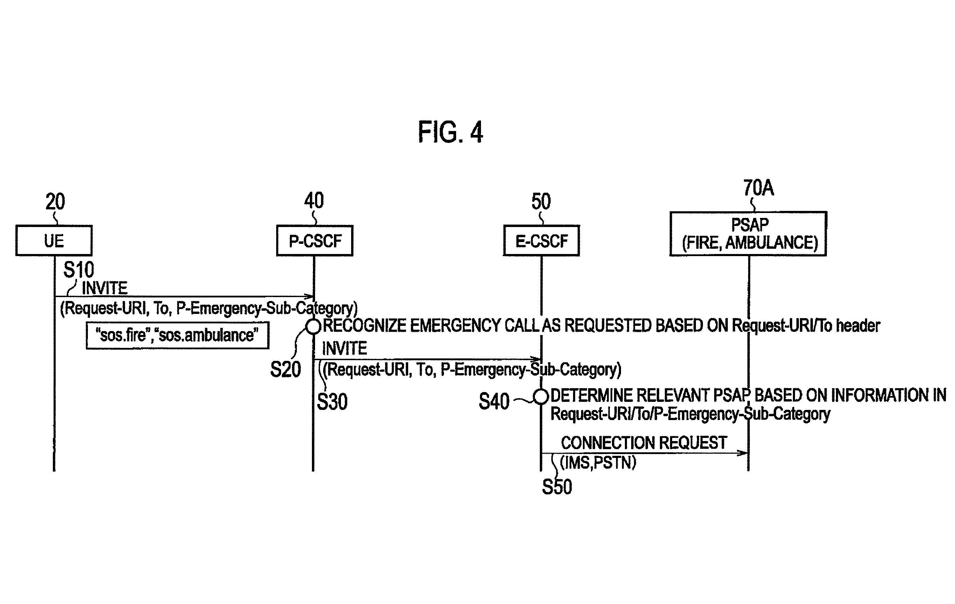

Fig. 4 illustrates an operation (communication sequence) until an emergency call originated by the UE 20 located in Japan (home network) is connected with a PSAP. As illustrated in Fig. 4, the UE 20 transmits an INVITE message to the P-CSCF 40 along with the origination of the emergency call by a user (S10). It is assumed here that the user dials "119."

The UE 20 transmits an INVITE message (see, Fig. 8) to the P-CSCF 40, the INVITE message in which "sos" is included in Request URI and To header and "sos. fire" and "sos. ambulance" are included in P-Emergency-Sub-Category. The INVITE message is firstly received by the P-CSCF 40.

The P-CSCF 40 recognizes that the request is for an emergency call from Request URI and To header of the received INVITE message (S20). On the basis of the recognition of the emergency call, the P-CSCF 40 relays the received INVITE message to the E-CSCF 50 (S30).

Based on the contents of the Request URI, To header, and P-Emergency-Sub-Category of the INVITE message relayed from the P-CSCF 40, the E-CSCF 50 determines a relevant PSAP with which the emergency call is to be connected (S40). Specifically, based on P-Emergency-Sub-Category including "sos.fire" and "sos. ambulance, " the E-CSCF 50 determines the PSAP 70A (see Fig. 9) associated with the emergency call category as a connection target PSAP.

The E-CSCF 50 transmits a connection request to the determined PSAP 70A (S50). The E-CSCF 50 can transmit a connection request through the IMS or a connection request through a circuit switched network (such as PSTN) according to the configurations of the communication network 60 and PSAP 70A.

### (3.2) Example emergency call connection operation 2

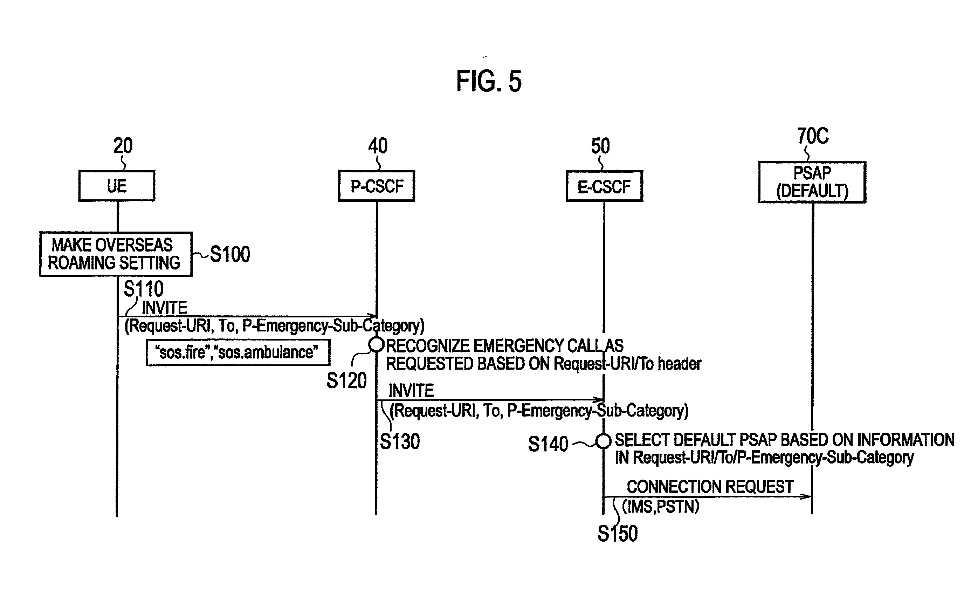

Fig. 5 illustrates an operation (communication sequence) until an emergency call originated by the UE 20 located in a visited roaming network such as a foreign network is connected with a PSAP. Here, the description of portions similar to those of the above-described example operation 1 are omitted if not necessary.

As illustrated in Fig. 5, since the UE 20 is located in a foreign country, it executes an overseas roaming setting (S100). Specifically, the UE 20 executes the setting and the like needed for connecting with an available radio access network of a telecommunications carrier in visited roaming network. It is assumed here that a user dialed "119" which is used in Japan, though the user stays in the foreign country.

The steps at S110 to 130 are similar to S10 to S30 in the example operation 1. In other words, the UE 20 and the P-CSCF 40 in the visited roaming network operate similarly as a case where the roaming is not performed.

Based on the contents of Request URI, To header, and P-Emergency-Sub-Category of the INVITE message relayed from the P-CSCF 40, the E-CSCF 50 in the visited roaming network determines a relevant PSAP with which the emergency call is to be connected (S140). It is assumed here that the roaming network visited by the UE 20 is configured by using different PSAPs for Fire and Ambulance.

In this case, based on the fact that P-Emergency-Sub-Category includes "sos.fire" and "sos. ambulance, "the E-CSCF 50 determines that a PSAP relevant as a connection target does not exist and selects the PSAP 70C (default PSAP) which transmits a voice guidance.

The E-CSCF 50 transmits a connection request to the selected PSAP 70C (S150). As a result of this, the voice guidance which inquires an emergency call category is transmitted from the PSAP 70C to the UE 20 and the PSAP 70C determines a PSAP as a connection target of the emergency call in response to the answering result with respect to the voice guidance, and transfers the emergency call to the determined PSAP.

### (3.3) PSAP determination operation flow by the E-CSCF 50

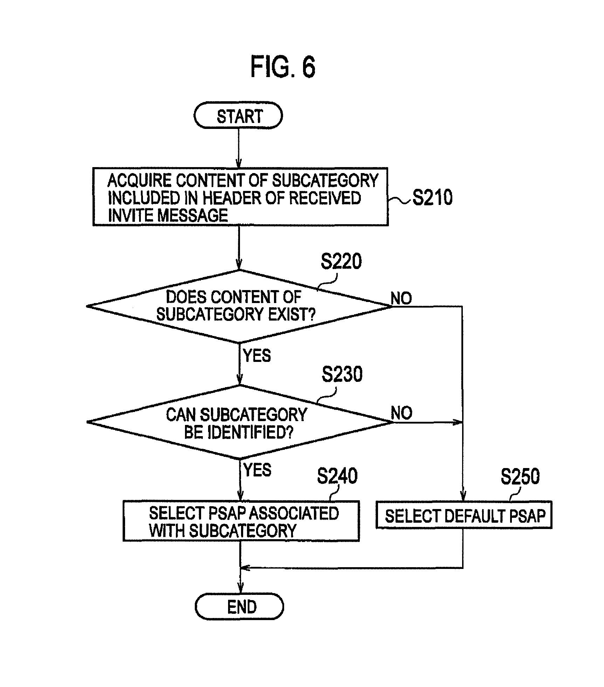

Fig. 6 illustrates a PSAP determination operation flow in the above-described E-CSCF 50. As illustrated in Fig. 6, the E-CSCF 50 acquires a subcategory included in the header of the received INVITE message, specifically, the content of P-Emergency-Sub-Category (S210).

The E-CSCF 50 determines whether or not P-Emergency-Sub-Category itself is included and whether or not P-Emergency-Sub-Category includes a subcategory (emergency call category) (S220).

When P-Emergency-Sub-Category is included, the E-CSCF 50 determines whether or not the subcategory can be identified (S230).

When the subcategory can be identified, the E-CSCF 50 selects the PSAP associated with the subcategory (S240).

On the other hand, when P-Emergency-Sub-Category is not included, or P-Emergency-Sub-Category does not include a subcategory, the E-CSCF 50 selects the default PSAP (PSAP 70C)

### (S250).

### (4) Advantageous Effects

According to the mobile communication system 10, when multiple emergency call categories associated with the emergency telephone number allocated to the PSAP exist, the UE 20 transmits an INVITE message including P-Emergency-Sub-Category indicating the multiple emergency call categories to the P-CSCF 40. Also, based on the multiple emergency call categories included in the received INVITE message, the E-CSCF 50 determines a PSAP with which the emergency call is to be connected.

More specifically, for example, when a user dials "119" in a case of roaming in a foreign country, the INVITE message including "sos.fire" and "sos.ambulance" is transmitted from the UE 20 as P-Emergency-Sub-Category. When Fire and Ambulance are provided by the same PSAP in the visited roaming network, a connection request based on the INVITE message is transmitted to the PSAP.

On the other hand, when a PSAP cannot be determined based on the multiple emergency call categories included in the INVITE message, specifically, when Fire and Ambulance are provided by different PSAPs in the visited roaming network, the default PSAP defined in advance is determined as a connection target of the emergency call.

For this reason, even if a user, when roaming in a foreign country, dials a telephone number (for example, 119) of an emergency call in a home network, the emergency call can be prevented from being connected to a PSAP not intended by the user.

### (5) Modification

Figs. 10(a) to 10(c) illustrate modifications of the header configuration of the INVITE message which is transmitted by the UE 20. In the header configuration illustrated in Fig. 10(a), Request URI and To header include information ("sos.fire.ambulance") indicating multiple emergency call categories. Similarly, in the header configuration illustrated in Fig. 10(b), Request URI and To header include information ("sos.fireANDambulance") indicating multiple emergency call categories.

In addition, in the header configuration illustrated in Fig. 10(c), the existing header is extended and multiple URIs ("sos.fire"; "sos.ambulance") are respectively set in Request URI and To header.

The header configurations of the INVITE message, which are illustrated in Figs. 10 (a) to (c), may be used in place of the header configuration of the INVITE message, which is illustrated in Fig. 8.

### [Second Embodiment]

Hereinafter, a second embodiment of the invention is described. In the following, portions different from those described in the first embodiment are mainly described and similar portions are omitted if not necessary.

### (1) Functional block configurations of UE 20 and E-CSCF 50

The functional block configurations of a UE 20 and an E-CSCF 50 according to the embodiment are same as those of the first embodiment. However, they are different from those of the first embodiment in the following points.

When multiple emergency call categories are associated with an emergency telephone number, a call origination request transmission unit 27 of the UE 20 according to the embodiment transmits an INVITE message (call origination request) including information that it is an emergency call and an inputted emergency telephone number to a P-CSCF 40. Specifically, only "sos" is set in Request URI of the INVITE message. On the other hand, an emergency telephone number (for example, 119) which is dialed by a user is set in To header.

Based on the emergency telephone number included in the received INVITE message, a call control unit 51 of an E-CSCF 50 according to the embodiment determines a PSAP with which the emergency call is to be connected.

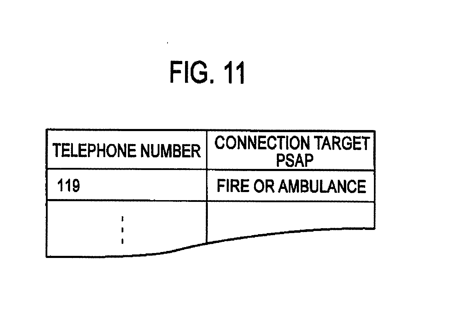

In addition, a PSAP information holding unit 53 according to the embodiment holds emergency call answering point information in which emergency telephone numbers and PSAPs are associated with each other. Fig. 11 illustrates an example of PSAP information P2 (emergency call answering point information) held by the PSAP information holding unit 53.

In the PSAP information P2 illustrated in Fig. 11, an emergency telephone number (119) is associated with Fire or Ambulance.

Based on the emergency telephone number included in the received INVITE message and the PSAP information P2 held in the PSAP information holding unit 53, a call control unit 51 determines a PSAP with which the emergency call is to be connected. Specifically, when the INVITE message includes 119, the call control unit 51 transmits a connection request for the emergency call to the PSAP of Fire or Ambulance, which is associated with 119.

Instead, based on the emergency telephone number included in the INVITE message, the call control unit 51 may directly create (in other words, without determining a PSAP category) and transmit an INVITE message (connection request) for the PSAP associated with the emergency telephone number. In addition, when a PSAP with which the emergency call is to be connected cannot be determined due to the fact that the PSAP information P2 does not include 119, the call control unit 51 may select a default PSAP.

### (2) Operation of the mobile communication system 10

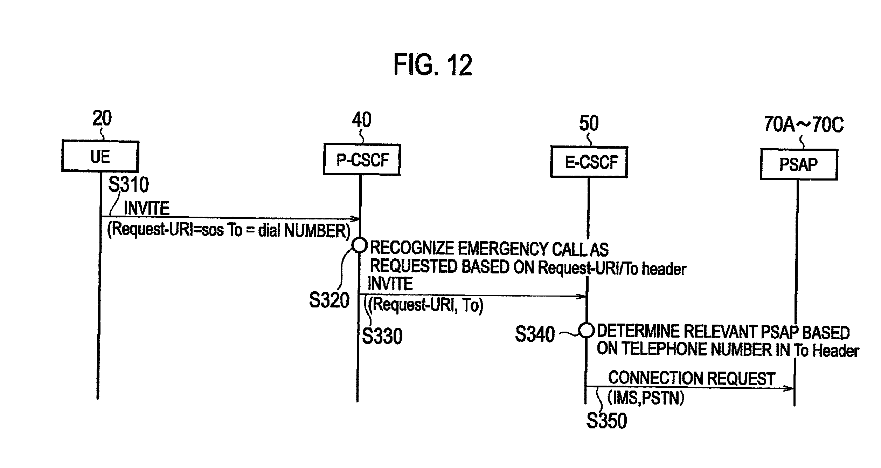

Hereinafter, an operation of the mobile communication system 10 when the UE 20 originates an emergency call is described. Fig. 12 illustrates an operation (communication sequence) until an emergency call originated by the UE 20 is connected with a PSAP.

As illustrated in Fig. 12, when multiple emergency call categories are associated with an emergency telephone number (for example, 119), the UE 20 transmits an INVITE message including information indicating that the request is for an emergency call and an inputted emergency telephone number to the P-CSCF 40 (S310).

The steps at S320 and S330 are substantially same as those at S20 and S30 in the P-CSCF 40 according to the above-described first embodiment.

Based on the contents of Request URI and To header of the INVITE message relayed from the P-CSCF 40, the E-CSCF 50 determines a relevant PSAP with which the emergency call is to be connected (S340). Specifically, based on the fact that the To header includes "119," the E-CSCF 50 determines a PSAP 70A (Fire/Ambulance) associated with the emergency call category as a connection target PSAP.

The E-CSCF 50 transmits a connection request to the determined PSAP 70A (S350).

### [Other Embodiment]

As described above, the details of the invention have been disclosed by using the first and second embodiments of the invention. However, it should not be understood that the description and drawings which constitute part of this disclosure limit the present invention. From this disclosure, various alternative embodiments, examples, and operation techniques will be easily found by those skilled in the art.

For example, in the above-described first and second embodiments, when a PSAP with which the emergency call is to be connected cannot be determined depending on the multiple emergency call categories included in the INVITE message received from the UE 20, a default answering point (PSAP 70C) defined in advance is determined as a connection target of the emergency call. However, such an operation is not necessarily needed. For example, although there is a possibility of being connected with a wrong PSAP, the emergency call may be connected with any one of the PSAPs.

Also, in the above-described first and second embodiments, LTE is described as an example. Instead, 3G (W-CDMA) or any other scheme may be used as long as the scheme is of a radio access network which provides services such as voice communication calls through an IMS IP multimedia subsystem.

The features of the present invention may also be expressed as follows. A first feature of the invention is summarized as a mobile communication system 10 (mobile communication system), including: a UE 20 (mobile station) configured to execute a radio communication with a eNB 30 (radio base station); and an E-CSCF 50 (call control device) forming an IP multimedia subsystem and configured to control a session of an emergency call originated from the mobile station. Here, the mobile station includes a call origination request transmission unit 27 (call origination request transmission unit) configured to transmit an INVITE message (call origination request) for the emergency call to the call control device, the call control device includes a call control unit 51 (call control unit) configured to receive the call origination request through the radio base station and determine a PSAP (emergency call answering point) which is a connection target of the emergency call based on the received call origination request, and if there are multiple emergency call categories (for example, ambulance or firefighting) associated with an emergency telephone number allocated to the emergency call answering point, the call origination request transmission unit transmits the call origination request including a category header indicating the multiple emergency call categories to the call control device, and the call control unit determines the emergency call answering point based on the multiple emergency call categories included in the received call origination request.

In the first feature of the invention, the call control unit may determine a default PSAP (default answering point) defined in advance as a connection target of the emergency call if the call control unit fails to determine the emergency call answering point depending on the multiple emergency call categories included in the call origination request.

In the first feature of the invention, the mobile station may include an emergency call category information holding unit 25 (holding unit) configured to hold emergency call category information M1 (emergency call category information) in which the emergency telephone number is associated with the multiple emergency call categories, and the call origination request transmission unit may transmit the call origination request based on the emergency call category information held in the holding unit.

In the first feature of the invention, the call origination request may be an INVITE message having Request URI and To header, and the call origination request transmission unit may transmit the call origination request in which the Request URI and the To header only include information indicating that the request is for an emergency call and the category header includes the multiple emergency call categories.

A second feature of the invention is summarized as a call control device forming an IP multimedia subsystem and configured to control a session of an emergency call originated from a mobile station configured to execute a radio communication with a radio base station, the call control device including: a call control unit configured to receive a call origination request for the emergency call through the radio base station and determine an emergency call answering point which is a connection target of the emergency call based on the received call origination request. Here, if there are multiple emergency call categories associated with an emergency telephone number allocated to the emergency call answering point, the call origination request includes a category header indicating the multiple emergency call categories, and the call control unit determines the emergency call answering point based on the multiple emergency call categories included in the received call origination request.

A third feature of the invention is summarized as a mobile station which executes a radio communication with a radio base station, the mobile station including: a call origination request transmission unit configured to transmit a call origination request for an emergency call to a call control device to control a session of the emergency call. Here, if there are multiple emergency call categories associated with an emergency telephone number allocated to an emergency call answering point, the call origination request transmission unit transmits the call origination request including a category header indicating the multiple emergency call categories to the call control device.

A fourth feature of the invention is summarized as a mobile communication method which uses a mobile station configured to execute a radio communication with a radio base station and a call control device forming an IP multimedia subsystem and configured to control a session of an emergency call originated from the mobile station, the method including the steps of: causing the mobile station to transmit a call origination request for the emergency call to the call control device; and causing the call control device to receive the call origination request through the radio base station and to determine an emergency call answering point which is a connection target of the emergency call based on the received call origination request. Here, in the transmitting step, if there are multiple emergency call categories associated with an emergency telephone number allocated to the emergency call answering point, the call origination request including a category header indicating the multiple emergency call categories is transmitted to the call control device, and in the determining step, the emergency call answering point is determined based on the multiple emergency call categories included in the received call origination request.

A fifth feature of the invention is summarized as a mobile communication system, including: a mobile station configured to execute a radio communication with a radio base station; and a call control device forming an IP multimedia subsystem and configured to control a session of an emergency call originated from the mobile station. Here, the mobile station includes a call origination request transmission unit configured to transmit a call origination request for the emergency call to the call control device, the call control device includes a call control unit configured to receive the call origination request through the radio base station, and determine an emergency call answering point which is a connection target of the emergency call based on the received call origination request, and if there are multiple emergency call categories associated with an inputted emergency telephone number, the call origination request transmission unit transmits the call origination request including information that the request is for the emergency call and the emergency telephone number to the call control device, and the call control unit determines the emergency call answering point based on the emergency telephone number included in the received call origination request.

In the fifth feature of the invention, the call control device may include a PSAP information holding unit 53 (holding unit) configured to hold PSAP information P2 (emergency call answering point information) in which the emergency telephone number is associated with the emergency call answering point, and the call control unit may determine the emergency call answering point based on the emergency telephone number included in the received call origination request, and the emergency call answering point information held in the holding unit.

A sixth feature of the invention is summarized as a call control device which forms an IP multimedia subsystem and controls a session of an emergency call originated from a mobile station configured to execute a radio communication with a radio base station, the call control device including: a call control unit configured to receive a call origination request for the emergency call from the mobile station through the radio base station and determine an emergency call answering point which is a connection target of the emergency call based on the received call origination request. Here, the call origination request includes information indicating that the request is for the emergency call and an emergency telephone number inputted in the mobile station, and the call control unit determines the emergency call answering point based on the emergency telephone number included in the received call origination request.

A seventh feature of the invention is summarized as a mobile station which executes a radio communication with a radio base station, the mobile station including: a call origination request transmission unit configured to transmit a call origination request for an emergency call to a call control device configured to control a session of the emergency call. Here, if there are multiple emergency call categories associated with an inputted emergency telephone number, the call origination request transmission unit transmits the call origination request including information indicating that the request is for the emergency call and the emergency telephone number to the call control device.

A eighth feature of the invention is summarized as a mobile communication method which uses a mobile station configured to execute a radio communication with a radio base station, and a call control device forming an IP multimedia subsystem and configured to control a session of an emergency call originated from the mobile station, the method including the steps of: causing the mobile station to transmit a call origination request for the emergency call to the call control device; and causing the call control device to receive the call origination request through the radio base station and to determine an emergency call answering point which is a connection target of the emergency call based on the received call origination request. Here, in the transmitting step, if there are multiple emergency call categories associated with an inputted emergency telephone number, the call origination request including information indicating that the request is for the emergency call and the emergency telephone number is transmitted to the call control device, and in the determining step, the emergency call answering point is determined based on the emergency telephone number included in the received call origination request.

A ninth feature of the invention is summarized as a mobile communication system, including: a mobile station configured to execute a radio communication with a radio base station; and a call control device forming an IP multimedia subsystem and configured to control a session of an emergency call originated from the mobile station. Here, the mobile station includes a call origination request transmission unit configured to transmit a call origination request for the emergency call to the call control device, the call control device includes a call control unit configured to receive the call origination request through the radio base station and determine an emergency call answering point which is a connection target of the emergency call based on the received call origination request, and if there are multiple emergency call categories associated with an emergency telephone number allocated to the emergency call answering point, the call origination request transmission unit transmits the call origination request including a category header indicating any one of the multiple emergency call categories to the call control device, and the call control unit determines the emergency call answering point based on the emergency call category included in the received call origination request.

A tenth feature of the invention is summarized as a mobile station which executes a radio communication with a radio base station, the mobile station including: a call origination request transmission unit configured to transmit a call origination request for an emergency call to a call control device configured to control a session of the emergency call. Here, if there are multiple emergency call categories associated with an emergency telephone number allocated to an emergency call answering point which is a connection target of the emergency call, the call origination request transmission unit transmits the call origination request including information indicating that the request is for the emergency call and a category header indicating any one of the multiple emergency call categories to the call control device.

A eleventh feature of the invention is summarized as a mobile communication method which uses a mobile station configured to execute a radio communication with a radio base station, and a call control device forming an IP multimedia subsystem and configured to control a session of an emergency call originated from the mobile station, the method including the steps of: causing the mobile station to transmit a call origination request for the emergency call to the call control device; and causing the call control device to receive the call origination request through the radio base station, and to determine an emergency call answering point which is a connection target of the emergency call based on the received call origination request. Here, in the transmitting step, if there are multiple emergency call categories associated with an emergency telephone number allocated to the emergency call answering point, the call origination request including a category header indicating any one of the multiple emergency call categories is transmitted to the call control device, and in the determining step, the emergency call answering point is determined based on the emergency call category included in the call origination request.

As described above, the invention naturally includes various embodiments which are not described herein. Accordingly, the technical scope of the invention should be determined only by the matters to define the invention in the scope of claims regarded as appropriate based on the description.

Note that the entire content of Japanese Patent Application No. 2012-164661 (filed on July 25, 2012) is incorporated by reference in the present specification.

### INDUSTRIAL APPLICABILITY

The characteristics of the invention can provide a mobile communication system, call control device, mobile station, and mobile communication method, by which even if a user, when roaming in a foreign country, dials an emergency call telephone number in a home network, the emergency call can be prevented from being connected to a PSAP not intended by the user.

### EXPLANATION OF REFERENCE NUMERALS

- 10: mobile communication system
- 20: UE
- 21: user interface
- 23: call processing unit
- 25: emergency call category information holding unit
- 27: call origination request transmission unit
- 30: eNB
- 40: P-CSCF
- 50: E-CSCF
- 51: call control unit
- 53: PSAP information holding unit
- 55: connection request transmission unit
- 60: communication network
- 70A to 70C: PSAP

## Claims

1. A mobile communication system, comprising:
a mobile station configured to execute a radio communication with a radio base station; and
a call control device forming an IP multimedia subsystem and configured to control a session of an emergency call originated from the mobile station, wherein
the mobile station includes a call origination request transmission unit configured to transmit a call origination request for the emergency call to the call control device,
the call control device includes a call control unit configured to receive the call origination request through the radio base station and determine an emergency call answering point which is a connection target of the emergency call based on the received call origination request, and
if there are multiple emergency call categories associated with an emergency telephone number allocated to the emergency call answering point, the call origination request transmission unit transmits the call origination request including a category header indicating the multiple emergency call categories to the call control device, and
the call control unit determines the emergency call answering point based on the multiple emergency call categories included in the received call origination request.

2. The mobile communication system according to claim 1, wherein the call control unit determines a default answering point defined in advance as a connection target of the emergency call if the call control unit fails to determine the emergency call answering point depending on the multiple emergency call categories included in the call origination request.

3. The mobile communication system according to claim 1, wherein
the mobile station includes a holding unit configured to hold emergency call category information in which the emergency telephone number is associated with the multiple emergency call categories, and
the call origination request transmission unit transmits the call origination request based on the emergency call category information.

4. The mobile communication system according to claim 1, wherein
the call origination request is an INVITE message having Request URI and To header, and
the call origination request transmission unit transmits the call origination request in which the Request URI and the To header only include information indicating that the request is for an emergency call and the category header includes the multiple emergency call categories.

5. A call control device forming an IP multimedia subsystem and configured to control a session of an emergency call originated from a mobile station configured to execute a radio communication with a radio base station, the call control device comprising:
a call control unit configured to receive a call origination request for the emergency call through the radio base station and determine an emergency call answering point which is a connection target of the emergency call based on the received call origination request, wherein
if there are multiple emergency call categories associated with an emergency telephone number allocated to the emergency call answering point, the call origination request includes a category header indicating the multiple emergency call categories, and
the call control unit determines the emergency call answering point based on the multiple emergency call categories included in the received call origination request.

6. A mobile station which executes a radio communication with a radio base station, the mobile station comprising:
a call origination request transmission unit configured to transmit a call origination request for an emergency call to a call control device to control a session of the emergency call, wherein
if there are multiple emergency call categories associated with an emergency telephone number allocated to an emergency call answering point which is a connection target of the emergency call, the call origination request transmission unit transmits the call origination request including information indicating that the request is for the emergency call and a category header indicating the multiple emergency call categories to the call control device.

7. A mobile communication method which uses a mobile station configured to execute a radio communication with a radio base station and a call control device forming an IP multimedia subsystem and configured to control a session of an emergency call originated from the mobile station, the method comprising the steps of:
causing the mobile station to transmit a call origination request for the emergency call to the call control device; and
causing the call control device to receive the call origination request through the radio base station and to determine an emergency call answering point which is a connection target of the emergency call based on the received call origination request, wherein
in the transmitting step, if there are multiple emergency call categories associated with an emergency telephone number allocated to the emergency call answering point, the call origination request including a category header indicating the multiple emergency call categories is transmitted to the call control device, and
in the determining step, the emergency call answering point is determined based on the multiple emergency call categories included in the received call origination request.

8. A mobile communication system, comprising:
a mobile station configured to execute a radio communication with a radio base station; and
a call control device forming an IP multimedia subsystem and configured to control a session of an emergency call originated from the mobile station, wherein
the mobile station includes a call origination request transmission unit configured to transmit a call origination request for the emergency call to the call control device,
the call control device includes a call control unit configured to receive the call origination request through the radio base station, and determine an emergency call answering point which is a connection target of the emergency call based on the received call origination request, and
if there are multiple emergency call categories associated with an inputted emergency telephone number, the call origination request transmission unit transmits the call origination request including information that the request is for the emergency call and the emergency telephone number to the call control device, and
the call control unit determines the emergency call answering point based on the emergency telephone number included in the received call origination request.

9. The mobile communication system according to claim 8, wherein
the call control device includes a holding unit configured to hold emergency call answering point information in which the emergency telephone number is associated with the emergency call answering point, and
the call control unit determines the emergency call answering point based on the information indicating that the request is for the emergency call, the emergency telephone number included in the received call origination request, and the emergency call answering point information held in the holding unit.

10. A call control device which forms an IP multimedia subsystem and controls a session of an emergency call originated from a mobile station configured to execute a radio communication with a radio base station, the call control device comprising:
a call control unit configured to receive a call origination request for the emergency call from the mobile station through the radio base station and determine an emergency call answering point which is a connection target of the emergency call based on the received call origination request, wherein
the call origination request includes information indicating that the request is for the emergency call and an emergency telephone number inputted in the mobile station, and
the call control unit determines the emergency call answering point based on the emergency telephone number included in the received call origination request.

11. A mobile station which executes a radio communication with a radio base station, the mobile station comprising:
a call origination request transmission unit configured to transmit a call origination request for an emergency call to a call control device configured to control a session of the emergency call, wherein
if there are multiple emergency call categories associated with an inputted emergency telephone number, the call origination request transmission unit transmits the call origination request including information indicating that the request is for the emergency call and the emergency telephone number to the call control device.

12. A mobile communication method which uses a mobile station configured to execute a radio communication with a radio base station, and a call control device forming an IP multimedia subsystem and configured to control a session of an emergency call originated from the mobile station, the method comprising the steps of:
causing the mobile station to transmit a call origination request for the emergency call to the call control device; and
causing the call control device to receive the call origination request through the radio base station and to determine an emergency call answering point which is a connection target of the emergency call based on the received call origination request, wherein
in the transmitting step, if there are multiple emergency call categories associated with an inputted emergency telephone number, the call origination request including information indicating that the request is for the emergency call and the emergency telephone number is transmitted to the call control device, and
in the determining step, the emergency call answering point is determined based on the emergency telephone number included in the received call origination request.

13. A mobile communication system, comprising:
a mobile station configured to execute a radio communication with a radio base station; and
a call control device forming an IP multimedia subsystem and configured to control a session of an emergency call originated from the mobile station, wherein
the mobile station includes a call origination request transmission unit configured to transmit a call origination request for the emergency call to the call control device,
the call control device includes a call control unit configured to receive the call origination request through the radio base station and determine an emergency call answering point which is a connection target of the emergency call based on the received call origination request, and
if there are multiple emergency call categories associated with an emergency telephone number allocated to the emergency call answering point, the call origination request transmission unit transmits the call origination request including a category header indicating any one of the multiple emergency call categories to the call control device, and
the call control unit determines the emergency call answering point based on the emergency call category included in the received call origination request.

14. A mobile station which executes a radio communication with a radio base station, the mobile station comprising:
a call origination request transmission unit configured to transmit a call origination request for an emergency call to a call control device configured to control a session of the emergency call, wherein
if there are multiple emergency call categories associated with an emergency telephone number allocated to an emergency call answering point which is a connection target of the emergency call, the call origination request transmission unit transmits the call origination request including information indicating that the request is for the emergency call and a category header indicating any one of the multiple emergency call categories to the call control device.

15. A mobile communication method which uses a mobile station configured to execute a radio communication with a radio base station, and a call control device forming an IP multimedia subsystem and configured to control a session of an emergency call originated from the mobile station, the method comprising the steps of:
causing the mobile station to transmit a call origination request for the emergency call to the call control device; and
causing the call control device to receive the call origination request through the radio base station, and to determine an emergency call answering point which is a connection target of the emergency call based on the received call origination request, wherein
in the transmitting step, if there are multiple emergency call categories associated with an emergency telephone number allocated to the emergency call answering point, the call origination request including a category header indicating any one of the multiple emergency call categories is transmitted to the call control device, and
in the determining step, the emergency call answering point is determined based on the emergency call category included in the call origination request.
